# EUROPEAN PATENT APPLICATION

(11) **EP 2 579 537 A1**
(43) Date of publication of application: **10.04.2013**
(21) Application number: 11447025.5
(22) Date of filing: 04.10.2011
(51) Int. Cl.: H04L 29/06

(54) **Method for securing data communication**

(71) Applicant: Thomson Telecom Belgium, 2650 Edegem (BE)
(72) Inventor: Kuzmenko, Roman, 2650 Edegem (BE)
(74) Representative: Huchet, Anne

(57) **Abstract**

The invention relates to a method for securing data communication between a first communicating device (302) and a second communicating device (304) connected through an unprotected network, the first communicating device being connected to the network through a first gateway (301), characterized in that the method comprises of step of establishing a secure tunnel (300) between the first gateway acting on behalf of the first communicating device and the second communicating device, the first gateway using cryptographic material and network identifier (X.X.X.X) from the first communicating device to negotiate the secure tunnel (300), and a step of transferring communication data between the first communicating device (302) and the second communicating device (304) on the secure tunnel.

## Description

### Field of the invention

The invention relates to the general field of securing communication on an unprotected network.

More particularly, the invention relates to a method for securing data communication between a first communicating device and a second communicating device connected through an unprotected network, the first communicating device being connected to the network through a first gateway.

### Back ground of the invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

As technologies emerge, including data communication on open and unprotected network, such as Internet, new questions are raised about communication privacy. By unprotected network, one should understand a network where privacy, authentication and confidentiality of communication data is not guaranteed. For instance, the technology of Voice over Internet Protocol, called VoIP, widely offered by Internet Service Provider (ISP), raises the issue of wiretapping.

There exists Internet security systems in order to protect communication data on Internet network among which the Internet Protocol Security (lPsec). IPsec is a protocol suite for securing Internet Protocol (IP) communications by authenticating and encrypting each IP packet of a communication session. IPsec includes a protocol called Authentication Headers (AH) providing data authentication and data integrity. Besides IPsec further includes a protocol called Security Association (SA) for establishing mutual authentication between devices at the beginning of the session and for negotiating cryptographic keys to be used during the session. SA comprises various embodiments either relying on manual configuration with pre-shared keys, or relying on Internet Key Exchange (IKE) or even IPSECKEY DNS. Finally IPsec further includes a protocol called Encapsulating Security Payload (ESP) for encrypting IP packets of communication session. IPsec is an end-to-end security scheme operating in the Internet Layer of the Internet Protocol Suite. It can be used in protecting data communication between a pair of hosts (host-to-host), between a pair of security gateways (network-to-network), or between a security gateway and a host (network-to-host). Hence, IPsec protects any application traffic across an IP network. Applications do not need to be specifically designed to use IPsec. On the contrary some others Internet security systems in widespread use, such as Secure Sockets Layer (SSL), Transport Layer Security (TLS) and Secure Shell (SSH), operate in the upper layers of the TCP/IP model. The use of TLS/SSL must be designed into an application to protect the application protocols.

There also exist Internet security systems in order to protect communication data where any device that, when connecting to another device, attempts to encrypt the communications channel otherwise falling back to unencrypted communications. This method, called Opportunistic Encryption (OE), requires no pre-arrangement between the two devices and offers virtual private networks operating in Opportunistic Encryption mode using IPsec based technology.

However the deployment of IPsec, including Opportunistic Encryption, involves sophisticated infrastructure requirements. The infrastructure requirements are even more complicated when a communicating device accesses to the Internet through a gateway: the association between a security gateway and the home network, including communication devices or hosts, protected by the security gateway need to be defined and authenticated, the communication data need to be encrypted.

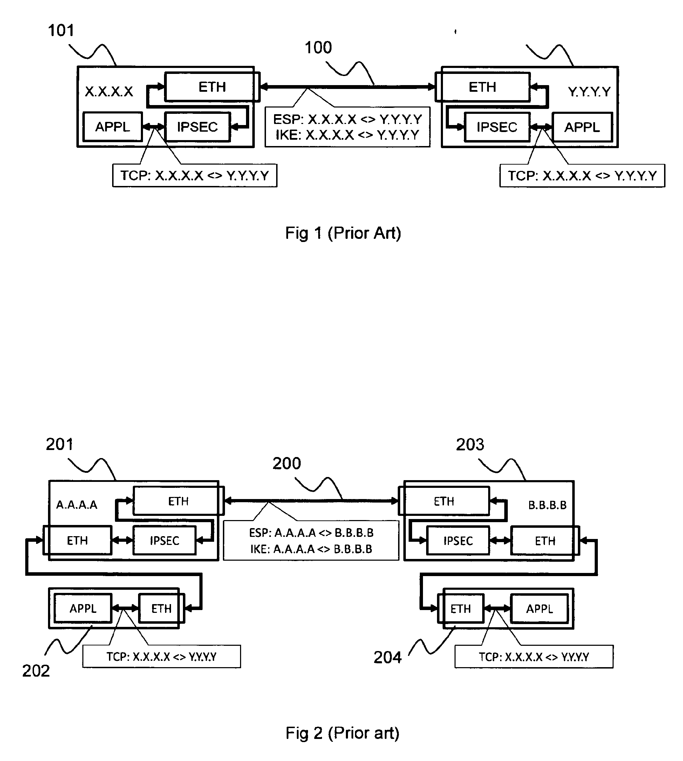

Various embodiments are known for establishing IPsec end-to-end communication between a source host and a destination host. A secure tunnel provides a secure path for data communication through an untrusted network. The skilled in the art knows tunneling protocols that use data encryption to transport insecure payload protocols over a public network (such as the Internet), thereby providing virtual private network functionality. Ipsec has an end-to-end transport mode, but can also operate in a tunneling mode through a trusted security gateway. **Figure 1** illustrates a first embodiment of prior art where a secure tunnel 100 is explicitly established between source host 101 and destination host 102.. The IP address X.X.X.X. is assigned to source host 101 while IP address Y.Y.Y.Y. is assigned to destination host 102. The IP address notation X.X.X.X illustrates IPv4 32 bits address. In this implementation, the source and destination IP addresses are represented on 128 bits. The application APPL of source host 101 initiates a TCP communication toward the application APPL of destination host 102 through respective Ethernet interface ETH. Both source and destination hosts have to be IPsec compliant, administrated by the same party and require computation power for IPsec encryption and authentication. **Figure 2** illustrates a second embodiment of prior art where a secure tunnel 200 is established between a source security gateway 201 protecting a source host 202 and destination security gateway 203 protecting a destination host 204. In this case, the IPsec requirements are deported from the host to the security gateways. Both source and destination gateways have to be IPsec compliant, administrated by the same party. Besides the association between the gateway which IP address is B.B.B.B. and destination host which IP address is Y.Y.Y.Y. need to be recognized and authenticated by the source host. Reciprocally at the source, same requirement applies to the association between the destination host and the gateway. These requirements involve pre-configuration constraints between hosts and security gateways.

Thus if IPsec is a preferable method for securing data communication, known methods for implementing IPsec raise the issue of the complexity of the embodiment either in the host, in the gateway or in the establishment of a trust relationship between source and destination.

A method for simply and efficiently securing data communication between communicating devices, such as hosts, protected by access devices such as gateway, connected through an unprotected network, is therefore needed.

### Summary of the invention

To this end, the invention relates to a method for securing data communication between a first communicating device and a second communicating device connected through an unprotected network, the first communicating device being connected to the network through a first gateway. The method is remarkable in that the method comprises a step of establishing a secure tunnel between the first gateway, acting on behalf of the first communicating device, and the second communicating device, the first gateway using cryptographic material and network identifier from the first communicating device to negotiate the secure tunnel; and a step of transferring communication data between the first communicating device and the second communicating device on the secure tunnel.

According to particularly advantageous characteristics, the first gateway intercepts communication data from the first communicating device to recover the network identifier of the first communicating device.

According to particularly advantageous characteristics, the step of establishing a secure tunnel comprises the step of exchanging cryptographic material between the first gateway and the second communicating device, the step of authenticating and/or encrypting communication data between the first gateway and the second communication device using exchanged cryptographic material.

According to particularly advantageous characteristics, the cryptographic material is chosen among public and private keys belonging to the first communicating device, a certificate signed by a third party, a self-signed certificate.

In a first preferred embodiment the method comprises a preliminary step of receiving in first gateway cryptographic material from the first communicating device.

In a second preferred embodiment the method comprises a preliminary step of generating in the first gateway a self-signed certificate.

In another preferred embodiment, the network is an IP network, the network identifier comprises an IP address and the secure tunnel comprise an IP secure tunnel.

In another preferred embodiment the second communicating device is connected to the network through a second gateway; the secure tunnel is further established between the first gateway acting on behalf of the first communicating device and the second gateway acting on behalf of the second communicating device, the second gateway using cryptographic material and network identifier from the second communicating device to negotiate the secure tunnel.

According to another aspect, the invention also relates to a gateway for securing data communication between a first communicating device and a second communicating device connected through an unprotected network, the gateway connecting the first communicating device to the unprotected network. The gateway comprises means for establishing, on behalf of the first communicating device, a secure tunnel with the second communicating device, the gateway using cryptographic material and network identifier from the first communicating device, and means for means for transferring data between the first communicating device and the second communicating device on the secure tunnel.

### Brief description of the drawings

Other characteristics and advantages of the invention will appear through the description of a non-limiting embodiment of the invention, which will be illustrated, with the help of the enclosed drawings.
- **Figure 1** illustrates prior art Host-to-Host tunnel mode,
- **Figure 2** illustrates prior art security gateway to security gateway tunnel mode,
- **Figure 3** illustrates transparent tunnel mode according to a first embodiment where hosts are protected by security gateway,
- **Figure 4** represents the method for securing data communication according to the first embodiment,
- **Figure 5** represents the method for securing data communication according to a second embodiment, and
- **Figure 6** represents a gateway according to a particular embodiment.

In the figures, the represented blocks are purely functional entities, which do not necessarily correspond to physically separate entities. These functional entities may be implemented as hardware, software, or a combination of software and hardware; furthermore, they may be implemented in one or more integrated circuits.

### Detailed description of preferred embodiments

Each feature or variant disclosed in the description, in the claims or in the drawings may be provided independently or in any appropriate combination.

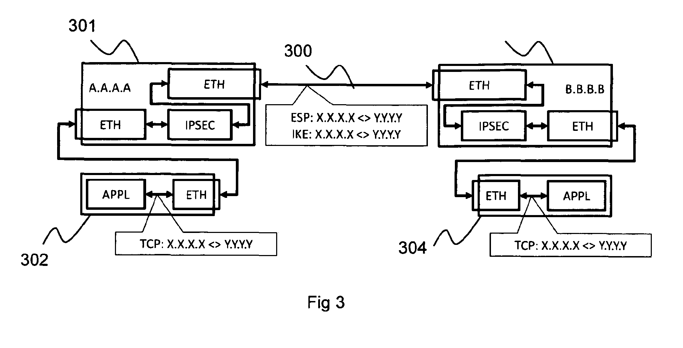

**Figure 3** illustrates transparent tunnel mode according to a first embodiment of the invention. A secure tunnel 300 is established between a source security gateway (SGW) 301 protecting a source host 302 and destination security gateway 303 protecting a destination host 304. As for security gateway to security gateway tunnel mode, the security requirements are deported from the host to the security gateways which requires implementing the same communication protection method or being configured according to certain private or public policy (such as opportunistic encryption comprising a public set of traffic protection policies). Thus according to a variant based on IPsec, the security gateway requires to be IPsec compliant and administrated by the same party.

However, the source SGW 103 negotiates the secure tunnel on behalf of source host using the network identifier of the source host. Thus according to the variant, where IKE is used for establishing session keys, SGWs generate and exchange IKE packets not using their own IP address but surprisingly using the IP address of the host. The pre-configuration of gateway network identifier, including definition and authentication of the network identifier, is advantageously reduced. Thus the requirement to authenticate association between SGW and host is no longer mandatory. Requirements are also advantageously reduced during the rest of the session for carrying the encrypted communication data. According to the variant where ESP is used for carrying encrypted packets, the SGW does not use their IP address but surprisingly uses the IP address of the host.

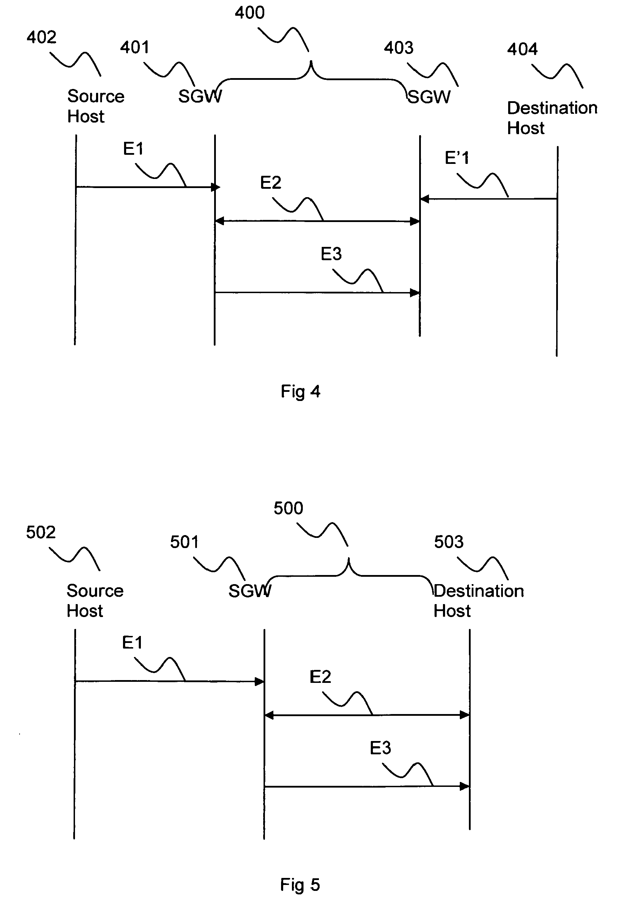

**Figure 4** represents the method for securing data communication according to a first embodiment. As for figure 3, in this embodiment, a secure tunnel 400 is established between a source security gateway (SGW) 401 protecting a source host 402 and destination security gateway 403 protecting a destination host 404.

In a first step E1, the source host 402 initiates a communication session towards destination host 404 by sending data packets. In an optional step E'1, for instance directed at securing bi-directional communication, the destination host 404 further initiates a communication session towards source host 402 by sending data packets. In a variant, the SGWs 401, 403 wait for the completion of steps E1 and optional E'1 before negotiating a secure tunnel in the step E2 and carrying communication data in step E3. The optional step E'1 advantageously enforces communication security since the steps E2 and E3 potentially generate a lot of data traffic. Source SGW 201, for instance according to the local security policy, intercepts certain data packets to recover the source and destination identifier. According to a variant, the intercepted packets are sent out immediately. According to another variant, the intercepted packets are buffered till the end of tunnel negotiation.

In a second step E2, both SGWs 401, 403 negotiate the establishment of a secure tunnel to carry data packets on behalf of hosts using cryptographic material associated to the end-point hosts. In general, the destination host 404 should either trust the association of the cryptographic material of the source host 402 to the source GGW or the destination host 404 should be able to verify it by itself or by a trusted third party. According to different variant cryptographic material comprise public and/or private keys belonging to end-point hosts, a self-signed certificate, a certificate signed by a third party.

In the variant where IKE is used for secure tunnel establishment, both SGW 401, 403 generate and send IKE packets using the same source IP address X.X.X.X. and destination IP address Y.Y.Y.Y. as the address intercepted in the IP packets sent from source host to destination host. To succeed IKE exchange and establish a secure tunnel on behalf of end-point hosts, SGWs need appropriate cryptographic material associated to the end-point hosts. According to different variant, the destination host 404 either trusts the association of the cryptographic material such as keys of the source host 402, or is able to verify it by itself using CGA/HBA authorization or by a trusted third party such as a Certification Authority.

In a third step E3, source SGW encrypt and send data packets to destination through the secure tunnel 400 to assure traffic protection. In the variant ESP is used for IPsec, source SGW 401 generate and send ESP packets using the IP address X.X.X.X. of the source host and IP address Y.Y.Y.Y of the destination host.

**Figure 5** represents the method for securing data communication according to a second embodiment. In this embodiment, a secure tunnel 500 is established between a source security gateway (SGW) 501 and destination host 503 where the security gateway 501 protects a source host 502. In a first step E1, the source host 502 initiates a communication session towards destination host 503 by sending data packets using the network identifier of the destination host. In a second step E2, the SGW 501 and the destination host 503 implement the same traffic protection policy, such as Opportunistic Encryption. The SGW 501 negotiates with the destination host 503, the establishment of a secure tunnel to carry data packets on behalf of source host 502 using the network identifier of the source host. In a third step E3, source SGW encrypts and sends data packets to destination through the secure tunnel 500.

In another variant, not illustrated by a figure, there is no remote peer to implement traffic protection. Then the communication continues in plain, without any protection.

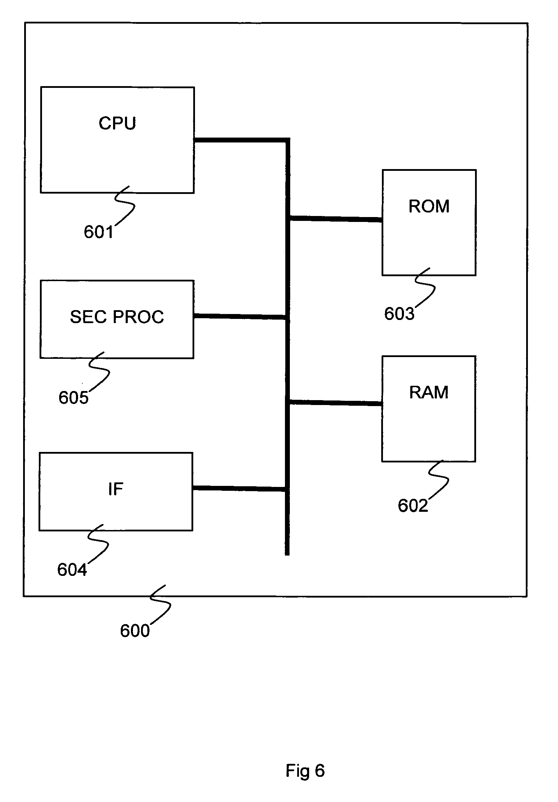

**Figure 6** illustrates a secure gateway for implementing the method according to a particular embodiment. The gateway 600 comprises physical means intended to implement an embodiment of the invention, for instance a processor 601 (CPU), a data memory 602 (RAM), a program memory 603 (ROM), at least a network interface 604 (IF) and a secure processor for implementing traffic protection policies 606. This latter component 606 comprises means for establishing on behalf of the host, a secure tunnel with the remote host, the gateway using cryptographic material and network identifier from local host. The network interface 604 (IF) comprises means to communicate through the home network with the local gateway and means to communicate through the unprotected network with the remote host. In particular, the network interfaces comprises means for transferring data between the local host and remote host on the secure tunnel.

Naturally, the invention is not limited to the embodiments previously described.

In particular, the invention is not limited to IPv4 standard, the invention is advantageously also compliant with IPv6 standard. Besides, the invention is neither limited to IPSec protocol. The invention is compatible with any type of data communication or protocol for establishing secure channel.

Finally, the term source and destination host are used for better understanding of the detailed embodiment, but in any case limiting the direction of communication.

## Claims

1. Method for securing data communication between a first communicating device (302) and a second communicating device (304) connected through an unprotected network, said first communicating device being connected to the network through a first gateway (301), **characterized in that** the method comprises the following steps :
- establishing a secure tunnel (300) between said first gateway acting on behalf of said first communicating device and said second communicating device, said first gateway using cryptographic material and network identifier (X.X.X.X) from said first communicating device to negotiate said secure tunnel (300),
- transferring communication data between said first communicating device (302) and said second communicating device (304) on said secure tunnel.

2. Method according to claim 1 **characterized in** said first gateway intercept communication data from said first communicating device to recover network identifier of said first communicating device.

3. Method according to any of claims 1 to 2 **characterized in that** the step of establishing a secure tunnel comprises the steps of:
- exchanging said cryptographic material between said first gateway and said second communicating device,
- authenticating and/or encrypting communication data between said first gateway and said second communication device using said exchanged cryptographic material.

4. Method according to any of claims 1 to 3 **characterized in** the cryptographic material is chosen among:
- public and private keys belonging to said first communicating device,
- a certificate signed by a third party,
- a self-signed certificate.

5. Method according to any of claims 1 to 4 **characterized in that** the method comprises a preliminary step of receiving in said first gateway cryptographic material from said first communicating device.

6. Method according to claim 4 **characterized in** the method comprises a preliminary step of generating in said first gateway a self-signed certificate.

7. Method according to any of claims 1 to 6 **characterized in that** the network is an IP network, the network identifier comprises an IP address and the secure tunnel comprises an IP secure tunnel.

8. Method according to any of claims 1 to 7 wherein said second communicating device (304) is connected to the network through a second gateway (303), **characterized in that** the secure tunnel (300) is further established between said first gateway (301) acting on behalf of said first communicating device (302) and said second gateway (303) acting on behalf of said second communicating device (304), said second gateway using cryptographic material and network identifier from said second communicating device to negotiate said secure tunnel.

9. A gateway (301, 303, 600) for securing data communication between a first communicating device and a second communicating device connected through an unprotected network, said gateway connecting said first communicating device to a network, **characterized in that** said gateway comprises:
- means for establishing on behalf of said first communicating device a secure tunnel with said second communicating device, said gateway using cryptographic material and network identifier from said first communicating device,
- means for transferring data between said first communicating device and said second communicating device on said secure tunnel.
